# EUROPÄISCHE PATENTSCHRIFT

(11) **EP 0 938 263 B1**
(45) Veröffentlichungstag und Bekanntmachung des Hinweises auf die Patenterteilung: **15.01.2003**
(21) Anmeldenummer: 98945213.1
(22) Anmeldetag: 12.08.1998
(51) Int. Cl.: A21D 13/00, A21B 5/00, A21C 13/02, A21C 9/08

(54) **VERFAHREN UND VORRICHTUNG ZUR HERSTELLUNG VON PIZZA**
METHOD AND DEVICE FOR PRODUCING PIZZA
PROCEDE ET DISPOSITIF DE PRODUCTION DE PIZZA

(30) Priorität: 19.08.1997 IT BZ970044
(43) Veröffentlichungstag der Anmeldung: 01.09.1999
(60) Teilanmeldung: 00126042.1
(73) Patentinhaber: Artos S.A., 1449 Luxembourg (LU)
(72) Erfinder: PILATI, Marco, I-38010 Tassullo (IT); MALFATTI, Pierluigi, I-38057 Pergine (IT); TORGHELE, Claudio, I-38100 Trento (IT)
(74) Vertreter: Oberosler, Ludwig
(86) Internationale Anmeldenummer: EP9805093
(87) Internationale Veröffentlichungsnummer: WO99008537

(56) Entgegenhaltungen:
- EP-A1- 0 056 346
- EP-A1- 0 554 926
- EP-A1- 0 708 421
- WO-A1-90/13229
- US-A- 3 735 692

## Beschreibung

Die Erfindung bezieht sich auf ein Verfahren und die entsprechende Vorrichtung zur mechanisierten und automatisierten Herstellung von verzehrsbereiten Pizzas, Fladen und dergleichen, ausgehend von frischen Zutaten durch Einzelfertigung infolge individueller Einzelbestellung.

Es sind Verfahren und Vorrichtungen für die automatisierte industrielle serienmäßige Produktion von Pizzas und Fladen bekannt welche im wesentlichen folgende Arbeitsfasen umfassen: -Vorbereitung des Teiges samt Aufgehen des Teiges, -Fließpressen des Teiges zwecks Bildung einer zusammenhängenden Masse, -Schneiden eines Teigstranges in Teigportionen, -Verarbeitung der Teigportio-nen zu flachen, runden Fladen, -Würzen und Garnieren, -Backen, -Verpackung für den Verzehr innerhalb des Verfallsdatums, bzw. für die Tiefkühlung. Die Vorrich-tungen zur Durchführung dieses Verfahrens sind sperrig und nehmen viel Platz in Anspruch, weiters werden mehrere Förderbänder benötigt um das Produkt von einer Vorrichtung zur nächsten zu befördern. Um die Vorbereitung des Teiges zu beschleunigen wird in manchen Verfahren ein vorbehandeltes getrocknetes Granulat verwendet, das Würzen, Garnieren und/oder Farcieren wird an einer Mindestzahl von Pizzas gleicher Art durch-geführt und zwar während des Durchlaufs der Pizzas welche in kleinem Abstand zu-einander auf dem Förderband liegen und anschließend in einem Tunnelofen gebak-ken werden; gemäß mancher Verfahren liegt die Pizza in eigenen Backformen um das Einschieben in den Backofen zu ermöglichen.

Die technischen Merkmale dieser bekannten Vorrichtungen ermöglichen es nicht Pizzas in Einzelfertigung, gemäß individueller Einzelbestellung, infolge Auswahl aus einer Liste, herzustellen.

Insbesondere ist aus der EP-A-0 554 926 ein Verfahren zur Herstellung von Pizza bekannt in welchem, durch Portionierung von einer vorbereiteten größeren Teigmenge welche in einem Behälter bereitsteht, Teigkugeln geformt werden welche durch Rollenpaare zu einem Fladen ausgewalzt werden oder in welchem, immer von der grossen Teigmenge, der Fladen durch Fließpressen, Walzen und Ausstanzen geformt wird. Dieses bekannte Verfahren weist den Nachteil auf, daß die aus der größeren vorbereiteten Teigmenge in größeren Zeitabständen gefertigten Fladen nicht die selben Eigenschaften aufweisen, weiters erfährt die Teigportion während ihrer Verarbeitung zu einem Fladen keine Wärmezufuhr was Schwierigkeiten beim Transport und beim Überwechseln des Fladens von einer Unterlage auf die nächste oder beim Einschieben in den Ofen, sowie längere Backzeiten, mit sich bringt.

Es sind weiters Anlagen bekannt in welchen der Fladen in vorgefertigter und eventuell vorgekochter Art vorliegt und, infolge Entnahme aus einem Kühlfach, garniert und gebacken, bzw. aufgewärmt, wird.

Die Erfindung stellt sich die Aufgabe ein Verfahren und die entsprechende Vorrichtung für eine mechanische und automatisierte Herstellung von, infolge individueller Auswahl aus einer Liste, einzeln bestellten Pizzas zu schaffen und zwar ausgehend von nicht vorgekochten oder tiefgefrorenen Zutaten für den Teig, welche einzeln gewürzt, garniert, farciert und gebacken werden und innerhalb möglichst kurzer Zeit verzehrbereit zur Verfügung stehen. Weiters ist es Aufgabe der Erfindung das Verfahren und die Vorrichtung so zu gestalten, daß der Produktionsablauf hygienisch und ohne menschlichen Eingriff erfolgt und daß, zwecks Wartung der Anlage und insbesondere bezogen auf die Hygiene und auf die Sauberhaltung der Anlage, periodische automatische Wasch- und Sterilisierzyklen vorgesehen sind und jene Teile welche mit den Nahrungsmitteln in Berührung kommen und nicht bereits der keimtötenden Einwirkung der Temperatur ausgesetzt sind, auf einfache Weise periodisch austauschbar sind. Zur Lösung dieser Aufgabe schlägt die Erfindung eine lineare oder ringförmige Fertigungsstraße vor welche aus folgenden Vorrichtungen besteht:
- einem bekannten Mischer samt Ladevorrichtung für die Mehlmischung, bzw. eine Dosiervorrichtung welche bereits vorgemischte und vorportionierte Mengen oder Teilmengen der Teigzutaten in eine Knetvorrichtung entleert,
- einer bekannten Dosier- und Wiegevorrichtung,
- einer Knet- und Fließpreßeinrichtung,
- einer erfindungsgemäßen Formvorrichtung für den Fladen,
- einer Tomatenmarkdosiervorrichtung mit -Verteiler,
- mehreren erfindungsgemäßen Dosier- und Streuvorrichtungen,
- einer Einschubvorrichtung für den Backofen, -einem Backofen,
- einer Entnahmevorrichtung für die gebackene Pizza und einer Transportvorrichtung für den Fladen von seiner Formung bis zum Backofen.

Gemäß einem vorprogrammierten Wasch- und Sterilisationszyklus wird die bekannte Vorrichtung, unter Erhöhung der Drehzahl und Änderung der Drehrichtung der Schnecken, durchgespült und durch Heißluft sterilisiert. Bei entsprechender Dosierung der Teigkomponenten und exakter Abstimmung der Drehzahlen wird eine kompakte Teigportion ausgepreßt welche, eventuell durch eine Schneidvorrichtung am Gehäuseausgang abgetrennt wird und auf die darunter bereitstehende beheizte oder vorgeheizte Transportplatte fällt. Eine Verschlußplatte am Gehäuseeingang und die eventuelle Schneidvorrichtung am Gehäuseausgang oder an der Auspreßdüse verschließen die Knetvorrichtung während des Stillstandes der Schnecken. Die Transportplatte kann aus unterschiedlichen Materialien gefertigt sein und ist erfindungsgemäß vorzugsweise durch elektrische Heizwiderstände beheizt oder vorgeheizt um die Backzeit zu verkürzen und damit sich der Teig, bzw. der Fladen, nicht an der Transportplatte verklebt und während der anschließenden Arbeitsfasen die nötige Festigkeit erhält um sich beim Einschieben in den Backofen nicht zu verformen.

Erfindungsgemäß dient die Transportplatte gleichzeitig auch als Teigauflage während der Formung des Fladens und als Auflage am Ofeneingang während des Einschiebens des Fladens in den Backofen. Es wird jedoch nicht ausgeschlossen, daß die Transportplatte selbst in den Ofen eingefahren wird und dort auch vorgeheizt wird.

Die erfindungsgemäße Formung des Fladens erfolgt unter einer Presse welche durch Herabsenken einer horizontalen Scheibe gegen die darunter positionierte Transportplatte die Teigportion auf eine vorgegebene Stärke platt auspreßt. Die absenkbare beheizte Scheibe ist erfindungsgemäß mit einem Ring versehen welcher mit Abstand zum kreisrunden Scheibenaußenrand unter Federeinwirkung vertikal verschiebbar gelagert ist. Dieser Ring gibt dem Außenrand des Fladens eine kreis-runde Form indem, während des Preßvorganges, der seitlich zwischen Transportplatte und Preßscheibe hervorquillende Teig im Zwischenraum zwischen Preßplattenaußenrand und Ringinnenseite eine Wulst bildet. Während des Preßvorganges legt sich zuerst der Ring an die Oberfläche der Transportplatte an, durch weiteres Absenken der Preßplatte wird die Teigportion zu einem Fladen flach ausgepreßt, während dieser Fase werden die Federn zwischen der Halterung des Ringes und dem Ring komprimiert, anschließend wird die Preßplatte wieder angehoben, die Federn können sich dabei wieder entspannen. Diese Wulst bildet gleichzeitig eine Barriere damit bei der anschließenden Verteilung von Tomatenmark, Saucen oder Pürees diese nicht über den Fladenrand hinausrinnen.

Die Formung des Fladens mittels der beschriebenen erfindungsgemäßen Vorrichtung ist zeitsparend und ermöglicht es, auch bei etwas unterschiedlicher

Teigmenge, immer einen regelmäßigen runden Fladen mit einem dickeren nach oben vorstehenden Randbereich zu formen.

Die Transportplatte wird samt dem geformten Fladen, nach der Formung des Fladens, unter die Dosier- und Verteilungsvorrichtung für Tomatenmark, Saucen oder Pürees weitertransportiert. Die Dosierung des Tomatenmarks, der Saucen und dergleichen kann über eine Peristaltikpumpe und einem Düsenkranz erfolgen so daß mehrere Produktmengen verstreut auf den darunter positionierten Fladen fallen. Die Verteilung dieser Produktmengen kann über mehrere Luftstrahlen (nahrungsmittelgerechte Luft) erfolgen welche aus Luftdüsen austreten die im Bereich der Produktaustritte angebracht sind und auf die, auf dem Fladen liegenden, Produktmengen gerichtet sind. Durch den Einsatz einer Peristaltikpumpe bei welcher die Zuleitung, die Ableitung, der Pumpteil und die Austrittdüsen ein einziges Schlauchstück bilden, ist es möglich den gesamten Schlauch durch welchen das Produkt fließt zu Reinigungszwecken auszutauschen.

Nach der Dosierstation für das Tomatenmark, die Saucen oder das Püree durchläuft die Transportplatte mehrere Dosierstationen welche alle gleicher oder auch unterschiedlicher Art sein können.

Der Backofen der Anlage kann für das Backen einzelner Fladen konzipiert sein.

Das Einschieben des garnierten Fladens welcher während der einzelnen beschriebenen Arbeitsfasen dauernd über die Transportplatte vorgewärmt wird kann auf traditionelle, mechanische Weise erfolgen.

Die Entnahmevorrichtung kann prinzipiell aus einem einschiebbaren Rost oder aus einem Blech bestehen das sich unter den gebackenen Fladen schiebt. Nach der eigentlichen Entnahmebewegung kann der Entnahmerost gekippt werden und die Pizza rutscht zur Ausgabe wo ein (Einweg-) Teller oder ein Mitnahmebehälter bereitsteht.

Der Durchlauf der beheizten erfindungsgemäßen Transportplatte vom Bereich unterhalb der Knet- und Fließpreßstation bis zur Einschieböffnung des Backofens und wieder zurück, kann z.B. über einen Ketten-, verzahnten Riemen- oder Seilzug erfolgen; auch eine Anordnung der einzelnen Fetigungsstationen in Ringform wird nicht ausgeschlossen. Die Erfindung schließt weiters nicht aus, daß die Transportplatte bis in den Backofen gefahren wird und daß eventuell zwei Transportplatten über den selben oder über getrennte Antriebe bewegt werden und/oder daß der Retourweg auf eigenen Führungen, eventuell an der Unterseite, erfolgt wodurch es möglich wird, daß z.B. während ein Fladen garniert wird, der nächste bereits geformt wird; in diesem Fall kann es vorteilhaft sein einen Backofen mit zwei Backflächen vorzusehen. Es besteht aber auch die Möglichkeit daß zwei Garnierstraßen einen einzigen, eventuell verfahrbaren, Backofen mit mehreren unter sich abgetrennten Backzonen beschicken.

Das erfindungsgemäße Verfahren sieht vor daß, zwecks Wahrung der Hygiene, ein Reinigungs und Austauschzyklus vorgegeben ist, dieser führt eine automatische Entleerung, Spülung und Sterilisierung der Knetvorrichtung mittels Heißluft durch und verlangt den Austausch der Schläuche samt Düsen für das Tomatenmark sowie der Gitter und/oder Siebe der Streuvorrichtungen.

Die Erfindung wird anschließend anhand eines in den beiliegnden Zeichnungen schematisch dargestellten, vorzuziehenden Ausführungsbeispieles einer, nach dem erfindungsgemäßen Verfahren arbeitenden Vorrichtung zur Herstellung von Pizzas näher erklärt; dabei erfüllen die Zeichnungen rein erklärenden und nicht begrenzenden Zweck.

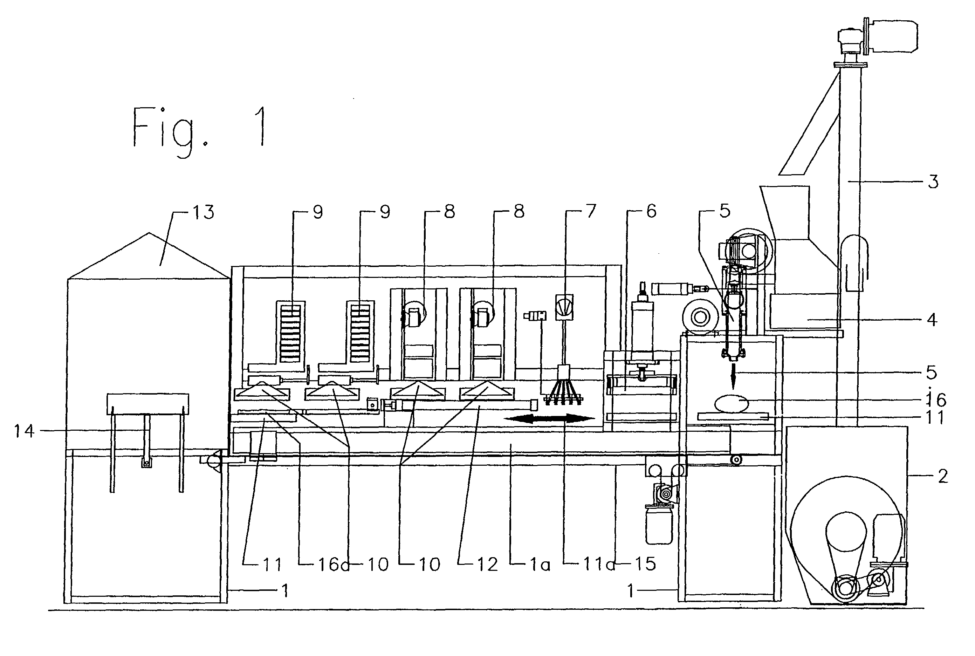

Die Fig. 1 zeigt in schematischer Seitenansicht eine erfindungsgemäße Vorrichtung zur Herstellung von Pizzas ohne Darstellung der gekühlten Behälter für die einzelnen Zutaten und ohne Behälter für die anfallenden leeren Verpackungselemente.

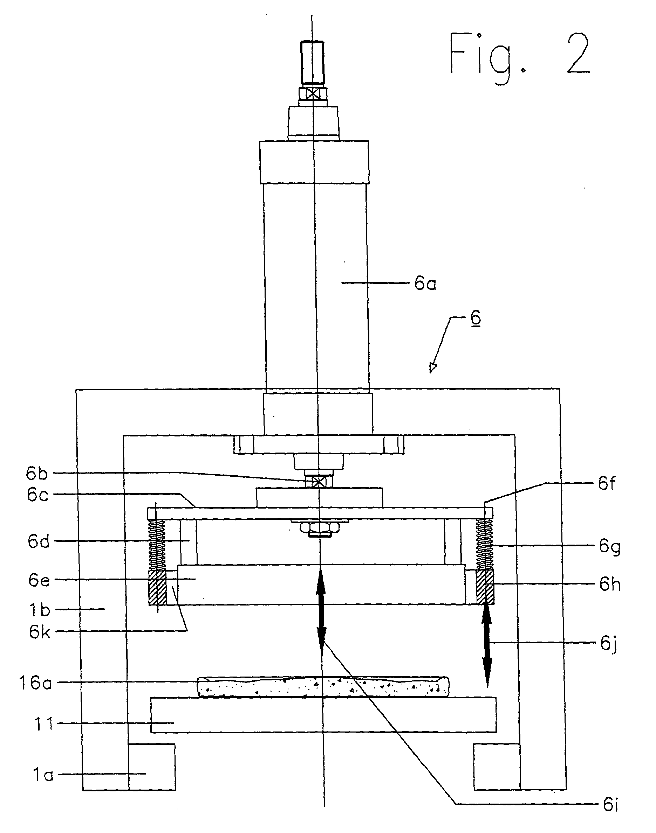

Die Fig. 2 zeigt die erfindungsgemäße Formvorrichtung für den Fladen mit dem Formring in Schnittdarstellung.

Die erfindungsgemäße Vorrichtung zur Herstellung von Pizzas nach dem erfindungsgemäßen Verfahren besteht wesentlich aus einem Grundgestell 1 an dessen einem Ende ein bekannter Mischer 2 samt bekannter Ladevorrichtung 3 und einer bekannten Dosier- und Wiegevorrichtung 4 für die Teigkomponenten befestigt ist. Am Ausgang dieser Dosier- und Wiegevorrichtung 4 ist eine Knet- und Fließpreßvorrichtung 5 vorgesehen in weicher der Teig gefertigt wird um als kompakte Teigportion 16 auszutreten 5j und frei auf die darunter bereitstehende erfindungsgemäße Transportplatte 11 zu fallen. Die Erfindung schließt nicht aus daß anstelle des freien Herunterfallens 5j der Teigportion eine Schneidvorrichtung am Ausgang diesen Vorgang bestimmt und daß diese Schneidvorrichtung, zusammen mit einer Schließvorrichtung am Gehäuseeingang, bei Stillstand der Schnecken, das Gehäuse der Knet- und Fließpreßvorrichtung verschließt.

Erfindungsgemäß ist die Transportplatte 11 vorzugsweise elektrisch beheizt es wird aber nicht ausgeschlossen, daß sie im Backofen selbst eine Aufheizung erfährt und erst anschließend die Position unter der Knet- und Fleißpreßeinrichtung 5 einnimmt. Die Transportplatte 11 ist auf eigenen Führungen 1a am Gestell 1 der Anlage geführt und wird mittels Ketten-, Riemen-, Seilzug oder dergleichen 15 zwischen der Knet- und Fließpreßstation 5 und dem Backofen 13 hin und her bewegt 11a.

Sobald die Teigportion 16 auf der Transportplatte 11 liegt, fährt 11a diese zur Formvorrichtung 6; diese besteht aus einem Rahmen 1b welcher einen senkrecht arbeitenden Zylinder 6a trägt dessen Kolbenstange 6b einen Halter 6c trägt an welchem eine beheizte Preßplatte 6e befestigt ist und ein umlaufender Ring 6h mittels Stößel 6f unter Zwischenwirkung von Druckfedern 6g senkrecht verschiebbar 6j gelagert ist. Durch Absenken 6i der Preßplatte 6e auf die Teigportion 16 wird diese flach zu einem Fladen 16a mit einer vorgegebenen Stärke gepreßt. Bevor die Preßplatte 6e den Teig 16 platt drückt, legt sich der Ring 6h an die Transportplatte an, ohne das weitere Absenken 6i der Preßplatte 6e zu verhindern, dabei gleiten die Stößel 6f axial im Halter 6c und die Federn 6g werden komprimiert, der zwischen Preßplatte 6e und Transportplatte hervorquillende Teig wird im Zwischenspalt 6k zu einer umlaufenden Wulst gestaut. Diese Wulst bildet eine Barriere welche es, insbesondere bei der Verteilung von Tomatenmark oder anderen flüssigen Zutaten auf dem Fladen 16a verhindert, daß diese über den Fladenrand hinausrinnt, weiters bildet diese Wulst eine größere Auflagefläche für den Einschiebemechanismus und verhindert so die Verformung des Fladens während des Einschiebens in den Backofen 13.

Der geformte Fladen 16a wird weiter unter den Tomatenmarkdosierer und Verteiler 7 gefahren 11a. Abschließend durchläuft 11a der Fladen auf der Transportplatte eine Reihe von bekannten Dosier- und Streuvorrichtungen 8, 9 bzw. 10 für die Garnierzutaten.

Je nach Bestellung (nach individuellem Wunsch) kann auf einem Fladen 16a von bestimmten Garnierzutaten auch die mehrfache Menge aufgebracht werden oder es können auch mehrere Dosierstationen 8, 9 übergangen werden.

Nachdem der Fladen 16a gemäß individueller Bestellung garniert worden ist und während der Arbeitsfasen auf der Transportplatte 11 auch vorgewärmt worden ist erreicht schließlich die Transportplatte 11 den Backofen 13. Erfindungsgemäß kann die Transportplatte in den Ofen einfahren und die Pizza wird im Backraum abgestreift, oder es kann die Transportplatte 11 samt der Pizza 16a während des Backvorganges im Ofen 13 verweilen und sich dort aufheizen und erst unmittelbar, infolge der nächsten Bestellung, den Ofen verlassen oder es kann eine eigene Einschiebvorrichtung auf der Transportplatte 11 aufgebaut sein welche die Pizza 16a, über die Transportplatte 11 hinweg, in den Ofen 13 schiebt; anschließend wird die Einschiebvorrichtung wieder zurückgezogen.

Das Ausziehen der gebackenen Pizza kann auf bekannte Weise erfolgen z.B. kann diese auch durch die Transportplatte 11 selbst wieder entnommen werden oder durch eine zweite Öffnung, in Linie mit der ersten oder versetzt z.B. um 90° zur ersten, durch eine eigene Entnahmevorrichtung entnommen werden.

Der Backofen kann auch für zwei oder mehrere Backstellen welche nebeneinander, hintereinander oder auch übereinander angeordnet sind, konstruiert sein und von zueinander parallel, übereinander oder in verschiedenen Richtungen oder ringförmig angeordneten Fertigungslinien beschickt werden; auch kann der Backofen zwischen den Fertigungslinien verfahrbar angeordnet sein.

## Patentansprüche

1. Verfahren zur mechanisierten und automatisierten Herstellung von Fladen und oder Pizzas ohne Verwendung von Backformen für den Fladen und ohne bereits vorgefertigt vorliegenden Fladen wobei der Fladen unter mindestens einer Garnierstation mit Garnierzutaten belegt wird, **dadurch gekennzeichnet, daß** jeder einzelne Fladen (16a), aus den einzelnen Teigzutaten oder aus einem vorportionierten Zutatengemisch als einzelne Teigportion (16) in einer Knet- und Fließpreßvorrichtung (5) vorbereitet wird und anschließend eine Reihe von Bearbeitungsstationen wie eine Formpresse (6), eine Dosier- und Verteilungsvorrichtung (7) für Tomatenmark, Saucen und dergleichen, eine oder mehrere Dosierstationen (8, 9) für die Garnierzutaten sowie die Backstation (13) auf einer vorgeheizten oder dauernd beheizten Transportplatte (11) durchläuft indem er auf Einzelbestellung, gemäß einer Auswahlliste gefertigt und garniert wird, daß die Fertigung einen vollständigen Produktionszyklus umfaßt wobei von den einzelnen Zutaten für die Teigzubereitung ausgehend, ohne die Verwendung von vorgefertigten und/oder vorgekochten Halbprodukten, unter Verwendung von vorportionierten Garnierzutaten, bzw. Teigzutaten, die Pizza auch unter Berücksichtigung der gewünschten Menge der Garnierzutaten und/oder Gewürze produziert wird und daß jene Teile der Produktionsanlage welche nicht bereits durch Temperatureinfluß einer andauernden keimtötenden Wirkung ausgesetzt sind, entweder durch einen programmierten Reinigungs- und Sterilizzationszyklus unter Anwendung von Wasser und Heißluft in Verbindung mit reinigenden und keimtötenden Mitteln und/oder durch einfachen Austausch von Vorrichtungskomponenten (10b) dauernd in hygienischem, den Lebensmittelverordnungen entsprechenden Zustand gewartet werden.

2. Verfahren gemäß dem Patentanspruch 1, **dadurch gekennzeichnet, daß** der Herstellungszyklus mit dem Vorwärmen einer Transportplatte (11) im Backofen (13) oder durch in der Transportplatte (11) eingebaute Heizelemente beginnt, daß der Backvorgang für die Pizza (16a) bereits mit der Formung (5) des Fladens (16a) beginnt und während der gesamten anschließenden Arbeitsfasen zum Garnieren, Farcieren und Würzen entweder durch die Wärmeabgabe der vorgeheizten Transportplatte (11) oder durch die ständige Beheizung dieser anhält so daß die Pizza (16a) beim Einschieben (16b) in den Backofen (13) sich problemlos von der Trasportplatte (11) löst und die nötige Konsistenz hat um durch einen Einschiebmechanismus, ohne Verformung des Fladens (16a) in den Ofen (13) geschoben werden zu können, bzw. in diesem zurückgehalten werden zu können.

3. Verfahren gemäß Patentanspruch 1, **dadurch gekennzeichnet, daß** die Formung des Fladens durch eine beheizte Preßvorrichtung erfolgt wobei der zwischen den Preßflächen im Randbereich hervorquillende Teig als Randwulst ausgebildet wird um so eine Barriere für die nachträgliche Aufbringung und Verteilung von Zutaten auf der Fladenoberfläche zu bilden und für den Einschiebmechanismus eine größere Aufliegefläche zu bilden was eine Verformung des Fladens beim Einschieben in den Ofen verhindert.

4. Verfahren gemäß Patentanspruch 1, **dadurch gekennzeichnet, daß** längs der Fertigungslinie der Anlage eine einzige Transportplatte (11) zwischen der Teigextrudierstation (5) und dem Backofen (13) sich hin- und herbewegt (11a) und eventuell im Backofen (13) vorgeheizt wird.

5. Verfahren gemäß Patentanspruch 1, **dadurch gekennzeichnet, daß** längs der Fertigungslinie der Anlage eine einzige Transportplatte (11) sich längs einer Ebene in Richtung Backofen (13) bewegt und längs einer vorzugsweise darunter liegenden Ebene in Richtung Teigextrudierstation (5) bewegt.

6. Verfahren gemäß Patentanspruch 1, **dadurch gekennzeichnet, daß** für die selbe Fertigungslinie zwei oder mehrere Transportplatten (11) vorgesehen sind welche von einem gemeinsamen Antreibsmechanismus (15) bewegt werden.

7. Verfahren gemäß Patentanspruch 1, **dadurch gekennzeichnet, daß** die Fertigungslinie ringförmig angelegt sein kann wobei eine oder mehrere Transportplatten (11) vorgesehen sein können.

8. Verfahren gemäß Patentanspruch 1, **dadurch gekennzeichnet, daß** mehrere Fertigungslinien einen Backofen mit mehreren unter sich abgetrennten Backräumen speisen oder einen Backofen (13) speisen welcher jeweils bei Bedarf zur betreffenden Fertigungslinie verschoben wird.

9. Vorrichtung zur Herstellung von Pizza in welcher die Formung des Fladens (16a) gemäß den in den vorhergehenden Patentansprüchen 1 und 4 beanspruchten Verfahrens erfolgt, **dadurch gekennzeichnet, daß** die Teigportion (16) auf eine vorgeheizte oder dauernd beheizte unter den Fertigungsstationen (6, 7, 8, 9) der Anlage verfahrbare (11a) Transportplatte (11) fällt (5j) welche anschließend unter die Formungsstation (6) gefahren wird in welcher eine beheizte Preßplatte (6e) samt einem äußeren Ring (6h) gegen die Transportplatte (11) abgesenkt (6i) wird, daß der Ring (6h) zuerst die Fläche der Transportplatte (11) berührt und auf dieser aufliegt während die Preßplatte (6e) weiter abgesenkt (6i) wird bis die gewünschte Stärke des Fladens erreicht ist, wobei die vom Ring (6h) nach oben abstehenden Führungsstifte (6f) in der Halterung (6c) axial gleiten und die dazwischenliegenden Druckfedern (6g) komprimiert werden und daß bei anschließendem Anheben (6i) der Preßplatte (6e) der Ring weiter durch die Federn (6g) an die Transportplatte (11) gedrückt wird bis die Führungsstifte (6f) mit ihren Köpfen an den oberen Enden, an der oberen Fläche der Halterung (6c), anschlagen und anschließend der Ring (6h) zusammen mit der Preßplatte (6e) angehoben wird.

## Claims

1. Method for the mechanized and automated production of flat cakes and/or pizzas without using baking moulds for the flat cakes and without already available pre-prepared flat cakes the flat cakes being topped with garnishing ingredients under at least one garnishing station, **characterized in that** each individual flat cake (16a) is prepared from the individual dough ingredients or from a pre-portioned ingredient mixture as an individual dough portion (16) in a kneading and extrusion apparatus (5) and then, on a pre-heated or continuously heated transport plate (11) passes through a series of processing stations, such as a shaping press (6), a metering and distribution apparatus (7) for tomato paste, sauces and the like, one or more metering stations (8, 9) for the garnishing ingredients and the baking station (13), each individual flat cake being produced and garnished to individual order according to a selection list, **in that** the production comprises a complete production cycle, where the pizza is produced, starting from the individual ingredients for dough preparation, without the use of pre-prepared and/or pre-cooked semi-manufactured products, using pre-portioned garnishing ingredients and dough ingredients, also taking into account the desired amount of garnishing ingredients and/or spices and **in that** those parts of the production installation which are not already exposed to continuous microbicidal action due to temperature effects are maintained permanently in a hygienic state in compliance with food legislation either by a programmed cleaning and sterilization cycle using water and hot air in conjunction with cleaning and microbicidal agents and/or by simple exchange of apparatus components (10b).

2. Method according to patent claim 1, **characterized in that** the production cycle starts with the pre-heating of a transport plate (11) in the baking oven (13) or by heating elements built into the transport plate (11), wherein the baking process for the pizza (16a) starts already with the shaping (5) of the flat cake (16a), and wherein the baking process continues during the complete following work phases for garnishing, stuffing, and seasoning either based on the heat dissipation of the pre-heated transport plate (11) or by the continuous heating of the transport plate (11), such that the pizza (16a) disengages without any problem from the support plate (11) upon insertion (16b) into the baking oven (13) and exhibits the necessary consistency in order to be slid into the oven (13) with a slide-in mechanism (11a) without deforming the flat cake or, respectively, to be retained in the oven (13).

3. Method according to patent claim 1, **characterized in that** the shaping of the flat cake is performed by a heated pressing device, wherein the dough welling up between the press faces in the edge region is formed as an edge bead in order to form thus a barrier for the successive placing and distribution of ingredients on the surface of the flat cake and in order to form a larger rest face for the insertion mechanism (11a), which prevents a deformation of the flat cake during insertion into the oven.

4. Method according to patent claim 1, **characterized in that** a single transport plate (11) moves back and forth (11a) between the dough extruder station (5) and the baking oven (13) along the production line of the installation and wherein the single transport plate (11) is possibly pre-heated in the baking oven (13).

5. Method according to patent claim 1, **characterized in that** a single transport plate (11) moves along a plane in direction of the baking oven (13) along the production line of the installation and moves along a plane disposed below the baking oven (23) in a direction of the dough extruder station (5).

6. Method according to patent claim 1, **characterized in that** two or more transport plates (11) are furnished for the same production line, which transport plates (11) are moved by a common drive mechanism (15).

7. Method according to patent claim 1, **characterized in that** the production line is arranged in a circle, wherein one or several transport plates (11) can be furnished.

8. Method according to patent claim 1, **characterized in that** several production lines feed a baking oven with several baking chambers, separated from each other, or feed a baking oven (13), which is shifted in each case to the respective production line in case of need.

9. Apparatus for producing pizza in which the flat cake (16a) is shaped in accordance with the method claimed in the preceding patent claims 1 and 4, **characterized in that** the dough portion (16) falls (5j) onto a pre-heated or continuously heated transport plate (11), movable (11a) under the production stations (6, 7, 8, 9) of the plant, which transport plate (11) is moved in the following under the shaping station (6), wherein a heated press plate (6e) including its outer ring (6h) is lowered (6i) toward the transport plate (11), wherein the ring (6h) rests on the face of the transport plate (11) while the press plate (6e) is further lowered (6i) until the desired thickness of the flat cake has been reached, wherein the guide pins (6f), projecting upwardly from the ring (6h), slide axially in the holder (6c) and the compression springs (6g), disposed between the guide pins (6f), are compressed, and wherein upon a subsequent lifting up (6i) of the press plate (6e), the ring is further pressed by the springs (6g) to the transport plate (11) until the guide pins (6f) with their heads at the upper ends abut at the upper face of the holder (6c), and in the following the ring (6h) together with the press plate (6e) is lifted up (6i).

## Revendications

1. Procédé de fabrication mécanisée et automatisée de galettes ou de pizzas, sans utilisation de moules de cuisson pour la galette et sans que les galettes se présentent à l'état déjà préfabriqué, la galette étant garnie d'ingrédients de garniture sous au moins un poste de garniture, **caractérisé en ce que** chaque galette (16a) individuelle, formée des différents ingrédients de pâtes ou bien d'un mélange d'ingrédients pré-proportionnés, est préparée sous forme de portion de pâte (16) individuelle dans un dispositif de pétrissage et d'extrusion (5) et, ensuite, passée par une rangée de postes de travail, tel qu'une presse de formage (6), un dispositif de pressage et de distribution (7) de la purée de tomate, des sauces et analogues, un ou plusieurs postes de dosage (8, 9) pour les ingrédients de garniture, ainsi que le poste de cuisson (13), en étant placée sur une plaque de transport (11) préchauffée ou chauffée de façon permanente, **en ce que**, en cas de commande individuelle, elle est fabriquée et garnie, selon une liste de sélection, **en ce que** la fabrication comprend un cycle de production complet, sachant que la pizza est produite à partir des différents ingrédients pour la préparation de la pâte, sans utilisation de demi-produits préfabriqués et/ou précuits, en utilisant des ingrédients de garniture, respectivement des ingrédients de pâte, pré-proportionnés, en prenant en compte également la quantité souhaitée d'ingrédients de garniture et/ou d'épices, et **en ce que** les parties de l'installation, qui ne sont pas déjà exposées à un effet germicide durable sous l'influence de la température, sont maintenues en permanence en un état hygiénique correspondant aux réglementations concernant les produits alimentaires soit par un cycle de nettoyage et de stérilisation programmé, en utilisant de l'eau et de l'air chaud en liaison avec des produits nettoyants et germicides, et/ou par simple remplacement de composants de dispositif (10b).

2. Procédé selon la revendication 1, **caractérisé en ce que** le cycle de fabrication commence par le préchauffage d'une plaque de transport (11) dans le four de cuisson (13) ou par des éléments chauffants intégrés dans la plaque de transport (11), **en ce que** le processus de cuisson concernant la pizza (16a) commence déjà par le moulage (5) de la galette (16a) et continue, pendant l'ensemble des phases opératoires subséquentes, concernant la garniture, le farcissage et l'assaisonnement aromatique, soit par émission de chaleur par la plaque de transport (11) préchauffée, soit par chauffage permanent de celle-ci, de sorte que, lors de l'insertion (16b) dans le four de cuisson (13), la pizza (16a) se détache sans problème de la plaque de transport (11) et présente la consistance nécessaire pour pouvoir, au moyen d'un mécanisme d'insertion, être passée dans le four (13) ou pour être retenue dans ce four, sans déformation de la galette (16a).

3. Procédé selon la revendication 1, **caractérisé en ce que** le moulage de la galette s'effectue au moyen d'un dispositif de pressage chauffé, la pâte, ressortant dans la zone de bordure sous l'effet du gonflage entre les faces de pressage, étant conformée en bourrelet de bordure, pour former ainsi une barrière pour l'application subséquente et la répartition des ingrédients sur la surface de la galette et pour former une plus grande surface de pose pour le mécanisme d'insertion, ce qui empêche toute déformation de la galette lors de l'insertion dans le four.

4. Procédé selon la revendication 1, **caractérisé en ce, que** le long de la ligne de fabrication de l'installation, une plaque de transport (11) unique est déplacée dans un sens et dans l'autre (11a), entre le poste d'extrusion de pâte (5) et le four de cuisson (13), et est éventuellement chauffée dans le four de cuisson (13).

5. Procédé selon la revendication 1, **caractérisé en ce que**, le long de la ligne de fabrication de l'installation, une plaque de transport (11) unique est déplacée le long d'un plan en direction du four de cuisson (13) et est déplacée dans la direction du poste d'extrusion de pâte (5), le long d'un plan situé de préférence au-dessous.

6. Procédé selon la revendication 1, **caractérisé en ce que** deux plaques de transport (11) ou plus, qui sont déplacées par un mécanisme d'entraînement (15) commun, sont prévues pour la même ligne de fabrication.

7. Procédé selon la revendication 1, **caractérisé en ce que** la ligne de fabrication peut être réalisée en forme d'anneau, sachant qu'une ou plusieurs plaques de transport (11) peuvent être prévues.

8. Procédé selon la revendication 1, **caractérisé en ce que** plusieurs lignes de fabrication alimentent un four de cuisson comportant plusieurs enceintes de cuisson séparées, ou bien alimentent un four de cuisson (13) qui est chaque fois déplacé en cas de besoin à la ligne de fabrication concernée.

9. Dispositif de fabrication de pizza dans lequel le moulage de la galette (16a) s'effectue selon le procédé revendiqué aux revendications 1 et 4 précédentes, **caractérisé en ce que** la partie pâte (16) tombe (5j) sur une plaque de transport (11), préchauffée ou bien chauffée de façon permanente, déplaçable (11a) sous les postes de fabrication (6, 7, 8, 9) de l'installation, plaque de transport qui est ensuite passée sous le poste de moulage (6), dans lequel une plaque de pressage (6e) chauffée, avec un anneau (6h) extérieur, est abaissée (6i) contre la plaque de transport (11), **en ce que** l'anneau (6h) entre d'abord en contact avec la surface de la plaque de transport (11) et repose sur celle-ci pendant que la plaque de pressage (6e) continue sa descente (6i) jusqu'à atteindre l'épaisseur souhaitée de galette, sachant que des tiges de guidage (6f), en saillie vers le haut depuis l'anneau (6h), glissent axialement dans la fixation (6c) et les ressorts de compression (6g) installés en position intermédiaire sont comprimés, et **en ce que**, lors du soulèvement (6i) subséquent de la plaque de pressage (6e), l'anneau est pressé plus encore sur la plaque de transport (11) par les ressorts (6g), jusqu'à ce que les tiges de guidage (6f) viennent par leur tête en butée sur les extrémités supérieures, sur la face supérieure de la fixation (6c), et l'anneau (6h) étant ensuite soulevé, conjointement avec la plaque de pressage (6e).
